# EUROPEAN PATENT SPECIFICATION

(11) **EP 1 486 320 B1**
(45) Date of publication and mention of the grant of the patent: **31.12.2008**
(21) Application number: 03707011.7
(22) Date of filing: 24.02.2003
(51) Int. Cl.: B29D 30/52, B29C 47/32, B29C 47/92

(54) **THIN RUBBER MEMBER PRODUCING METHOD, RUBBER ROLLING DEVICE, AND RUBBER ROLLING METHOD**
VERFAHREN ZUR HERSTELLUNG EINES DÜNNEN KAUTSCHUKGLIEDS, KAUTSCHUKWALZVORRICHTUNG UND KAUTSCHUKWALZVERFAHREN
PROCEDE DE PRODUCTION D'ELEMENT EN CAOUTCHOUC MINCE, DISPOSITIF DE CALANDRAGE DE CAOUTCHOUC, ET PROCEDE DE CALANDRAGE DE CAOUTCHOUC

(30) Priority: 22.02.2002 JP 2002046811; 06.03.2002 JP 2002059953; 01.05.2002 JP 2002129784
(43) Date of publication of application: 15.12.2004
(73) Proprietor: Bridgestone Corporation, Tokyo 104-8340 (JP)
(72) Inventor: OGAWA, Kenji, c/o BRIDGESTONE CORPORATION, Chuo-ku, Tokyo 104-8340 (JP); KATA, Takehiro, c/o BRIDGESTONE CORPORATION, Chuo-ku, Tokyo 104-8340 (JP)
(74) Representative: Whalley, Kevin
(86) International application number: PCT/JP2003/001981
(87) International publication number: WO 2003/070453

(56) References cited:
- EP-A- 0 453 294
- EP-A- 1 065 043
- EP-A2- 0 453 294
- EP-A2- 0 904 959
- DE-U1- 9 208 837
- JP-A- 2001 030 372
- JP-A- 2001 328 180
- US-A- 4 155 789
- US-A- 5 267 847
- US-A- 5 639 404
- US-A- 6 152 720
- PATENT ABSTRACTS OF JAPAN vol. 2000, no. 09, 13 October 2000 (2000-10-13) & JP 2000 159399 A (BRIDGESTONE CORP), 13 June 2000 (2000-06-13)
- PATENT ABSTRACTS OF JAPAN vol. 2000, no. 19, 5 June 2001 (2001-06-05) & JP 2001 030372 A (YOKOHAMA RUBBER CO LTD:THE), 6 February 2001 (2001-02-06)
- PATENT ABSTRACTS OF JAPAN vol. 016, no. 494 (M-1324), 13 October 1992 (1992-10-13) & JP 04 182120 A (YOKOHAMA RUBBER CO LTD:THE), 29 June 1992 (1992-06-29)
- PATENT ABSTRACTS OF JAPAN vol. 2002, no. 03, 3 April 2002 (2002-04-03) & JP 2001 328180 A (YOKOHAMA RUBBER CO LTD:THE), 27 November 2001 (2001-11-27)
- PATENT ABSTRACTS OF JAPAN vol. 1996, no. 07, 31 July 1996 (1996-07-31) & JP 08 071981 A (BRIDGESTONE CORP), 19 March 1996 (1996-03-19)
- PATENT ABSTRACTS OF JAPAN vol. 2000, no. 13, 5 February 2001 (2001-02-05) & JP 2000 289122 A (BRIDGESTONE CORP), 17 October 2000 (2000-10-17)

## Description

The present invention relates to a method of manufacturing a thin rubber member.

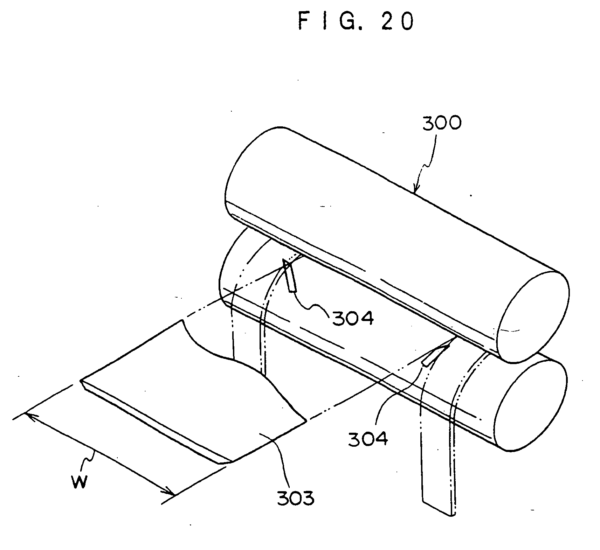

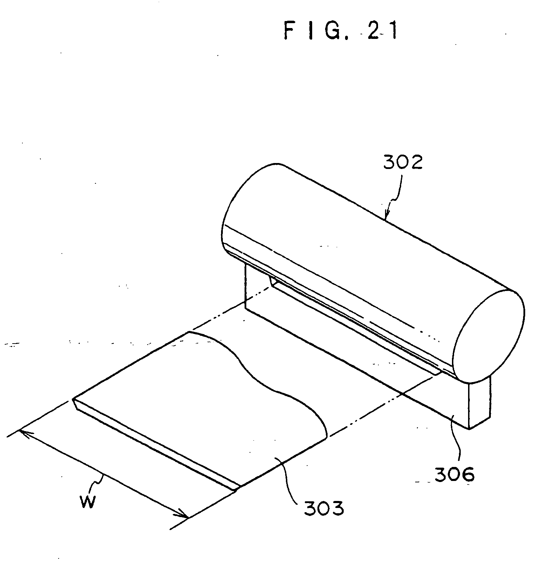

Conventionally, a rubber member.used for a tire, for example a rubber sheet such as an inner liner or the like, has been manufactured by a method of sheeting a rubber member by a so-called 2-roller die 300 as shown in Fig. 20, a method of sheeting a rubber sheet by a so-called 1-roller die 2 as shown in Fig. 21, or a method using four calendar rolls (not shown).

As for an inner liner 303 formed by such conventional methods as described above, the inner liner 303 during sheeting has a width W that corresponds to a distance between one bead toe and the other bead toe, along a tire inner surface as seen from a cross section along a tire rotational axis. After being extruded with this width, the inner liner 303 was cut to a length that corresponds to a circumferential length of the tire inner surface.

Further, it is desired that both end portions in a transverse direction of the inner liner 303 be tapered in order to prevent air or inner surface solutions from entering the inner liner 303. As shown in Fig. 20, both end portions are diagonally cut by the cutters 304, or as shown in Fig. 21, the shape of a cap 306 is determined such that each of both end portions of the inner liner 303 is tapered.

During a manufacturing process of a tire, a sheet of the inner liner 303 thus obtained is wound around a drum, and thereafter tire structural members such as a carcass ply and the like are sequentially wound around the drum to thereby form a green tire.

If the inner liner 303 is manufactured by this method, a plurality of roller dies having different widths must be prepared in accordance with a size or a type of a tire, whereby plant and equipment cost at a factory was high.

Thus, in recent years, a method in which a ribbon-shaped unvulcanized rubber strip is spirally wound around a drum to form a desired rubber sheet on the drum has been proposed (Japanese Patent Applications (JP-A) Laid-Open No. 2000-246812 or the like).

In a conventional method, the ribbon-shaped rubber strip is wound around a drum such that portions in the vicinities of transverse direction end surfaces of the ribbon-shaped rubber strip are overlapped with one another so as not to form gaps between windings of a spiral. Therefore, level differences are formed on the surface of the rubber sheet thus formed, air is easily accumulated into concave portions of the level differences, and there has been a concern about a treatment of end portions of the rubber sheet.

Therefore, the inventors conducted various experiments and arrived upon a method of effectively manufacturing a thin rubber member which is optimal for inner liners or the like, in which level differences are not formed, and which can accommodate various sizes, by forming an elongated rubber strip in which taper portions are provided at both side portions in a transverse direction and by overlapping the taper portions one another.

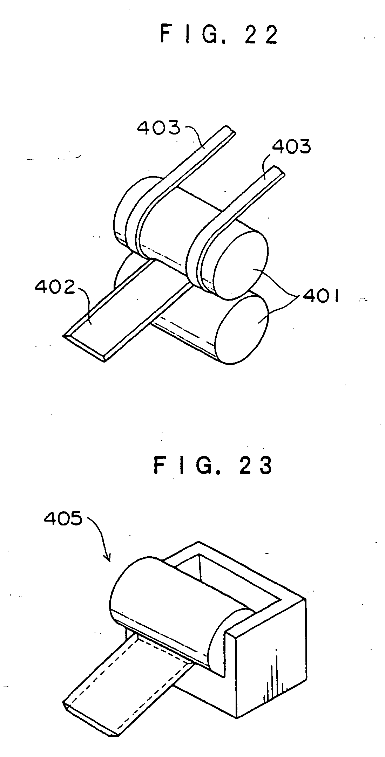

In a case in which a rolled rubber sheet (rubber strip) having a predetermined width is sequentially formed with high accuracy, in the prior art, as shown in Fig. 22; only a required configuration portion 402 is cut from the rolled rubber sheet fed out from a calendar roll 401, and remaining portions 403 are returned to an extruder or the like as a knead-back rubber and are subjected to knead-back.

Change in a discharge amount of an unvulcanized rubber with respect to the calendar roll affects a width of the rolled rubber sheet that is supposed to be molded, and a width variation thereby occurs. Especially when both edge portions of the rolled rubber sheet to be molded are provided with inclining taper portions, it becomes difficult to obtain a width with high accuracy. For this reason, the rolled rubber sheet fed out from the calendar rolls 401 is cut into a required configuration so that the remaining rubbers 403 are provided for knead-back.

The smaller (the more acute) the inclination angle of the taper portion of the rolled rubber sheet in order to improve quality, the more difficult the increase of the width accuracy, thus making it more necessary to precisely cut the rolled rubber sheet into a required configuration.

To precisely cut the rolled rubber sheet into a required configuration by using the calendar roll 401 leads to a requirement of a knead-back operation for providing the remaining portion 403 for knead back. Accordingly, it becomes disadvantageous in respect of space, problems may easily occur, and there is also a concern that productivity may be inhibited.

Further, to repeat a knead-back of rubber leads to a change of rubber properties. This is the last operation to be carried out in order to stabilize the quality of the product.

There is provided a method in which a rolled rubber sheet is formed with high width accuracy by using a 1-roller die 405 as shown in Fig. 23. The 1-roller die 405 is heavy, requires high manufacturing cost, and outputs a small amount of a leakage of rubber thus necessitating a periodical treatment.

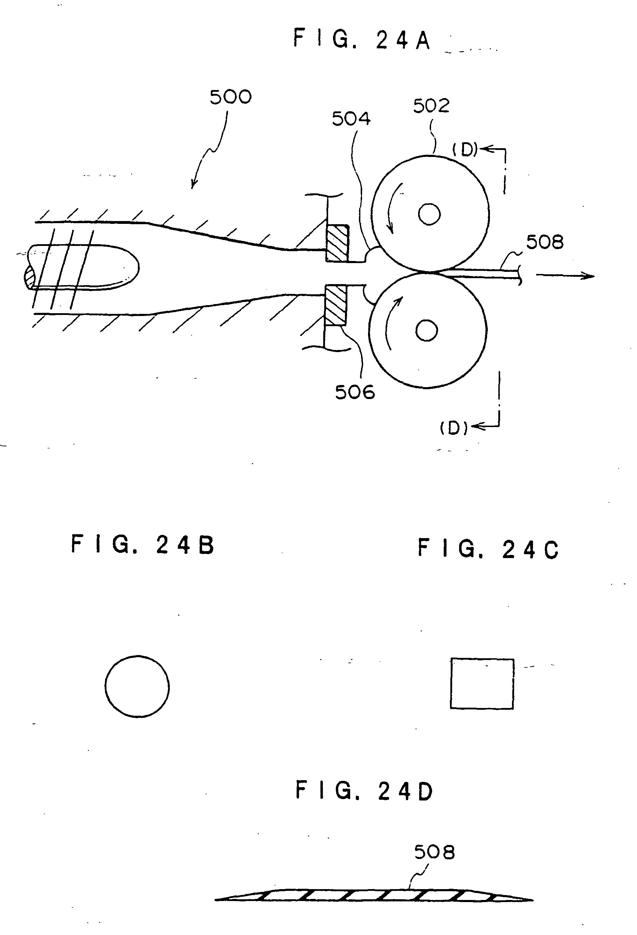

If an elongated rolled rubber sheet 508, which is formed into a cross-sectional configuration as shown in Fig. 24 (D) whose end portions in the transverse direction are tapered so as to form a taper portion respectively at both end portions in the transverse direction of the elongated rolled rubber sheet 508, is rolled by a roller head, there have been provided two methods, one in which a rubber bank is produced on a roller head and the other in which a rubber bank is not produced on the roller head.

First, if a rubber bank is produced on a roller head, as shown in Fig. 24 (A), a rubber bank 504 is formed on a roller head 502 disposed at a rubber discharge side of a rubber extruder 500. Since a cap 506 of a rubber extruder 500 is used simply to supply a constant amount of rubber into the roller head 502, the cap 506 is generally formed into a circular shape as shown in Fig. 24 (B) or a rectangular shape as shown in Fig. 24 (C).

Next, if a rubber bank is not produced on the roller head 502, the opening of the cap 506 is formed into a rectangular shape substantially similar to a roller head profile.

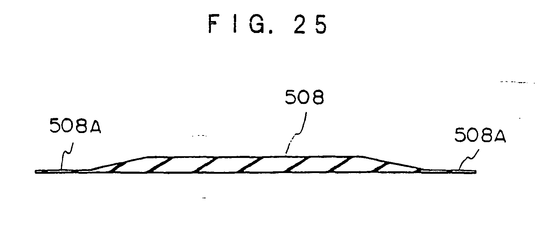

With a conventional method of producing a rubber bank on a roller head, a bank amount increases or decreases due to a variation of an amount in which rubber is discharged from a rubber extruder. Especially when a bank amount increases, rubber is swollen out from the roller head profile (see Fig. 25 reference numeral 508A refers to a swollen-out portion), and the swollen-out portion 508A is kept in close contact with the roller head 502, and sometimes adhered to the rolled rubber sheet, and there is caused a problem in that foreign matters enter the rolled rubber sheet.

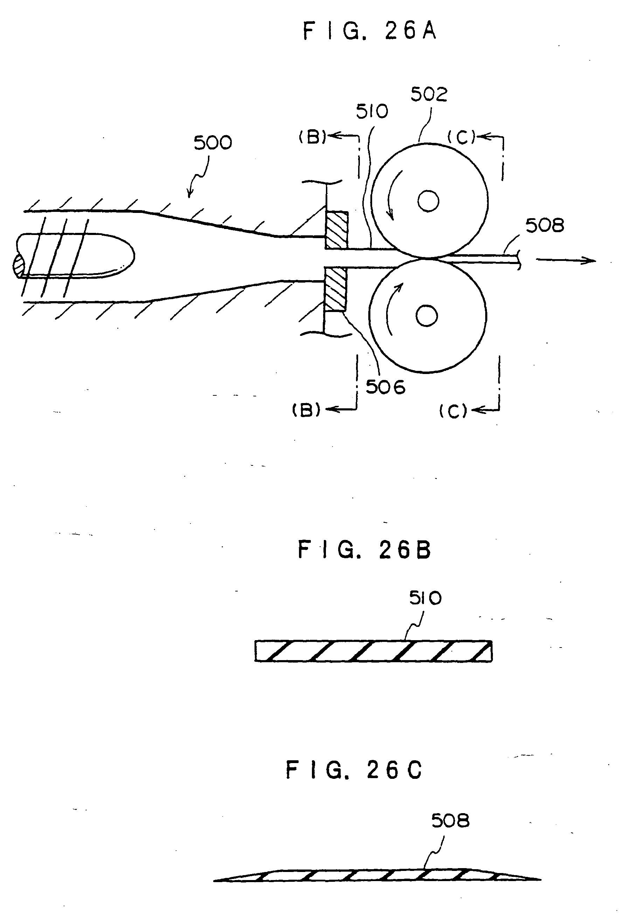

As shown in Fig. 26 (A), if a rubber bank is not produced on the roller head 502, a comparatively wide extruding rubber 510 having a cross-sectional configuration as shown in Fig. 26 (B) is rolled from the cap 506 by the roller head 502.

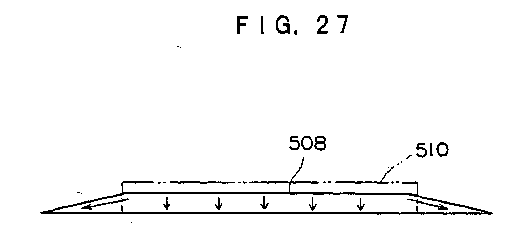

During the rolling, rolling directions at a straight portion at the center of the rubber sheet (a portion having a fixed thickness) and those at taper portions are different from each other (directions of arrows: rubber orientations) as shown in Fig. 27. As a result, a sheet-contracted amount generated after the rolling is taper portions< straight portion. Accordingly, a phenomenon occurs in which taper portions are corrugated with time, whereby a problem is caused in that sheet quality may deteriorate.

In other words, when a low quality elongated rubber strip is used, as a matter of course, it is difficult to obtain a high quality rubber strip.

In view of the aforementioned facts, an object of the present invention is to provide a method of manufacturing a thin rubber member which has a constant thickness, which method can accommodate various sizes, and which method can sequentially provide an elongated rubber strip having excellent configuration accuracy and high quality.

Attention is also drawn to the disclosures of EP-A-0453294; EP-A-1065043; JP-2000-159399A; JP-2001-030372A; JP-04-182120A; and JP-2001-328180A.

A first aspect of the present invention provides a method of manufacturing a thin rubber member comprising:
a first step of cutting a long rectangular rubber strip having taper portions formed at both side portions thereof to have a predetermined length such that both cut end portions of each strip are inclined with respect to a normal line stood vertically on the strip surface thereby to form a segmented rubber strip; and
a second step of connecting a plurality of the segmented rubber strips to each other in a transverse direction such that the taper portions at both side portions in a transverse direction of each of the segmented rubber strips are overlapped to each other, thereby obtaining a rubber sheet.

Particular embodiments of the invention are the subject of the dependent claims.

Next, an operation and an effect of the method of manufacturing a thin rubber member according to the first aspect will be explained.

First, in the first step, since the rectangular rubber strip is cut so as to be inclined with respect to a normal line stood vertically on the strip surface, the side portions of the elongated rubber strip in a longitudinal direction are formed into a tapered shape.

In the second step, the segmented rubber strips are connected to each other in a transverse direction with the taper portions at both side portions in a transverse direction of each of the segmented rubber strips overlapped to each other, and a thin rubber member which has a large area and of which all edge portions are tapered can be formed.

In accordance with the method of manufacturing a thin rubber member, thin rubber members having various sizes can be manufactured by changing a length of an elongated rubber strip, a number of connections, and the like. In addition, a thin rubber member having a fixed thickness can be manufactured by the taper portions overlapping each other.

A second aspect of the present invention provides a method of manufacturing a thin rubber member comprising:
a first step of cutting a long rectangular rubber strip having taper portions formed at both side portions thereof to have a predetermined length thereby to form a segmented rubber strip;
a second step of connecting a plurality of the segmented rubber strips to each other in a transverse direction thereof such that taper portions at both side portions in the transverse direction of each of the segmented rubber strips are overlapped to each other thereby to obtain a rubber sheet; and
a third step of cutting both end portions of the rubber sheet in a direction orthogonal to a direction in which the segmented rubber strips are connected to each other such that both cut end portions of each strip are inclined with respect to a normal line stood vertically on the sheet surface.

Next, an operation and an effect of the method of manufacturing a thin rubber member according to the second aspect will be explained.

In the first step, since the segmented rubber strips are formed by cutting the long rectangular rubber strip to have a predetermined length, the segmented rubber strip has taper portions formed at both side portions thereof.

In the next second step, the segmented rubber strips are connected to each other in a transverse direction such that the taper portions at both side portions in a transverse direction of each of the segmented rubber strips are overlapped to each other thereby obtaining a rubber sheet.

In the next third step, both end portions of the rubber sheet, in a direction orthogonal to a direction in which the segmented rubber strips are connected to each other, are cut so as to be inclined with respect to a normal line stood vertically on the sheet surface.

Accordingly, a thin rubber member which has a large area and of which all edge portions are tapered can be obtained.

In the first aspect of the present invention, the second step preferably comprises spirally winding the elongated rubber strip while overlapping the taper portions with each other.

In this second step of the preferred method, the elongated rubber strip having taper portions at both side portions in a transverse direction is spirally wound while the taper portions are overlapped with each other thereby to form a cylindrical thin rubber member.

Further, when the thin rubber member is used as a tire structural member, the cylindrical thin rubber member can be used unchanged.

For example, when a green tire is manufactured, an elongated rubber strip is spirally wound around an outer circumferential surface of a drum, and a cylindrical inner liner (thin rubber member) can be formed at the outer circumferential surface of the drum.

Then, tire structural members such as a bead ring, a carcass ply, a side wall rubber, a belt, a tread and the like can be attached to the drum on which the inner liner has been formed, and a green tire can be formed.

The method preferably further comprises cutting each of a wind-start portion and a wind-end portion of the rectangular rubber strip into a tapered shape whose width gradually becomes narrow.

In this preferred method, if the rectangular rubber strip, whose both end portions in a longitudinal direction are cut at a right angle with respect to the longitudinal direction, is spirally wound, step differences are formed at the end portions respectively at the wind-start side and at the wind-end side. In accordance with the preferred method, since each of the wind-start portion and the wind-end portion of the elongated rubber strip is cut into a tapered shape whose width gradually becomes narrow, step differences are not formed at the respective end portions at the wind-start side and at the wind-end side.

Further, the end portion in a longitudinal direction of the elongated rubber strip can be cut into the tapered shape before and after the spirally winding of the elongated rubber strip.

The method also preferably further comprises cutting at least one portion of a cylindrical thin rubber member that is obtained by spirally winding the elongated rubber strip in an axial direction thereby obtaining at least one rubber sheet.

In this preferred method, at least one portion of the cylindrical thin rubber member is cut along an axis and expanded thereby obtaining at least one rubber sheet.

The invention will be further described with reference to the accompanying drawings, in which:
Fig. 1 is a perspective view of an extruder and a roller die;
Fig. 2(A) is a perspective view of a cutter;
Fig. 2(B) is a side view of the cutter;
Fig. 3 is a perspective view of a cutter according to another embodiment of the present invention;
Fig. 4 is a perspective view of a cutter according to yet another embodiment of the present invention;
Fig. 5(A) is a perspective view of a rubber sheet;
Fig. 5(B) is a cross-sectional view of the rubber sheet shown in Fig. 5(A) cut along a line 5(B)-5(B);
Fig. 5(C) is a cross-sectional view of the rubber sheet shown in Fig. 5(A) cut along a line 5(C)-5(C);
Fig. 6 is a perspective view of a drum in the middle of being wound by an elongated rubber sheet;
Fig. 7 is a perspective view of the elongated rubber strip and the drum after a trimming;
Fig. 8(A) is a plan view of a rubber sheet;
Fig. 8(B) is a cross-sectional view of the rubber sheet shown in Fig. 8(A) cut along a line 8(B)-8(B);
Fig. 9(A) is a plan view of vicinities of end portions in a longitudinal direction of an elongated rubber strip;
Fig. 9(B) is a cross-sectional view of the elongated rubber strip shown in Fig. 9(A) cut along a line 9(B)-9(B);
Fig. 10 is a perspective view of another elongated rubber strip;
Fig. 11 is an appearance perspective view of a rubber roller;
Fig. 12 is a side view of the rubber roller;
Fig. 13(A) is a view of a target cross-sectional configuration of an elongated rubber strip;
Fig. 13(B) is a view of a configuration of a cap;
Fig. 14 is a block diagram of a control system of the rubber roller;
Fig. 15(A) is a side view of another rubber roller;
Fig. 15(B) is a cross-sectional view in a transverse direction of an unvulcanized rubber discharged from a cap;
Fig. 15(C) is a cross-sectional view in a transverse direction of a rubber strip elongated by a roller head;
Fig. 16 is a front view of the cap;
Fig. 17 is a front view of the roller head;
Fig. 18 is a block diagram of an electric system;
Fig. 19 is an explanatory view illustrating a direction in which a rubber is rolled;
Fig. 20 is a perspective view of a 2-roller die for manufacturing a conventional inner liner;
Fig. 21 is a perspective view of a 1-roller die for manufacturing a conventional inner liner;
Fig. 22 is a view of a calendar roll involving a conventional knead-back;
Fig. 23 is a view of a conventional 1-roller die;
Fig. 24(A) is a side view of a conventional roller on which a rubber bank is formed;
Fig. 24(B) is a front view of a cap;
Fig. 24(C) is a front view of another cap;
Fig. 24(D) is a cross-sectional view along a transverse direction of a rolled rubber sheet rolled by a roller head;
Fig. 25 is a cross-sectional view along a transverse direction of the rolled rubber sheet on which a swollen-out portion has been formed;
Fig. 26(A) is a side view of a conventional roller on which a rubber bank is not formed;
Fig. 26(B) is a cross-sectional view in a transverse direction of an unvulcanized rubber discharged from a cap;
Fig. 26(C) is a cross-sectional view along a transverse direction of a rolled rubber sheet rolled by a roller head; and
Fig. 27 is an explanatory view illustrating a direction in which a rubber is rolled by a conventional apparatus.

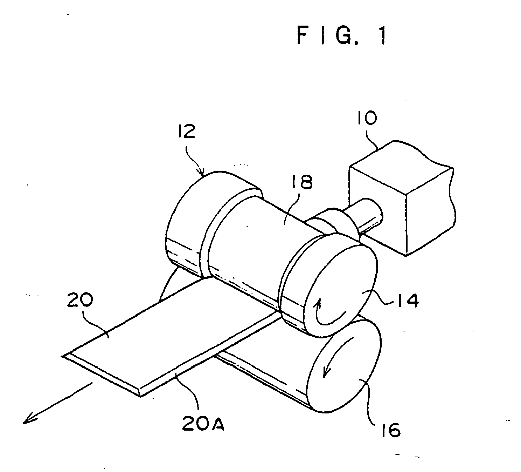

With reference to Figs. 1 to 5, a method of manufacturing a thin rubber member according to a first embodiment of the present invention will be explained, hereinafter.

As shown in Fig. 1, a roller die 12 is disposed at a discharge outlet side of an extruder 10.

The roller die 12 comprises an upper roller 14 and a lower roller 16.

A wide groove 18 is formed at the center of the upper roller 14.

The depth of the groove 18 is fixed in a roller axial direction, and groove walls at both sides of the groove 18 are inclined at an angle of about 87° with respect to a roller radial direction.

The upper roller 14 and the lower roller 16 are rotated by an unillustrated driving apparatus in a direction of an arrow.

The extruder 10 extrudes an unvulcanized rubber composition, that is supplied into a hopper (not shown), from the discharge outlet. The rubber composition, which is extruded from the discharge outlet, is passed through the roller die 12, and then extruded as an elongated rubber strip 20 having a fixed thickness.

Further, both side portions in a transverse direction of the elongated rubber strip 20 extruded from the roller die 12 form taper portions 20A each of which is inclined at an angle of about 3° with respect to a sheet surface. Moreover, the angle of each of the transverse direction side portions of the elongated rubber strip 20 is not limited to an angle of 3°, and instead can be another angle.

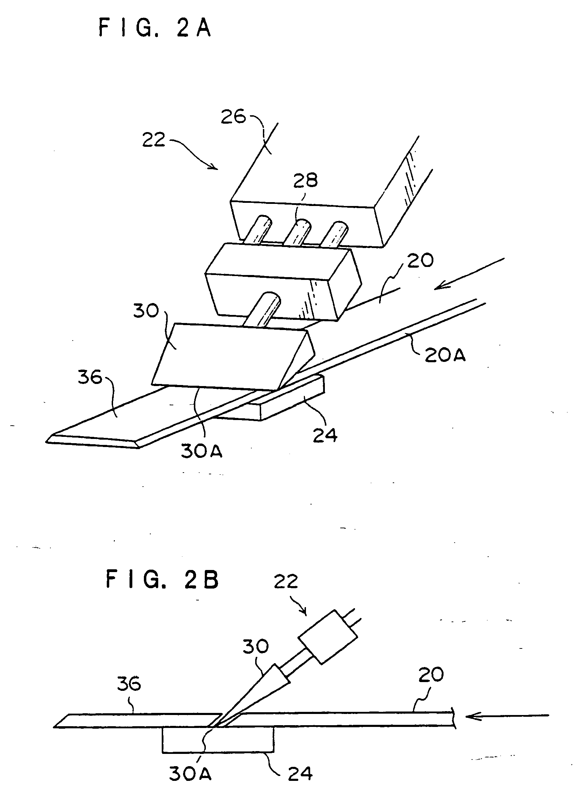

A cutting apparatus 22 as shown in Fig. 2 is disposed in a direction in which a rubber sheet is extruded from the roller die 12.

The cutting apparatus 22 includes an anvil 24 that supports a bottom surface of the elongated rubber strip 20.

A cutter 30 is disposed above the anvil 24, and is connected to a rod 28 of a driving apparatus 26 comprising a cylinder, a motor and the like.

An upper surface of the anvil 24 is horizontal, and a blade 30A of the cutter 30 is parallel to the upper surface of the anvil 24, and also in parallel to a transverse direction of the elongated rubber strip 20 (orthogonal to a longitudinal direction thereof).

The rod 28 moves in an axial direction, and the cutter 30 is moved in a direction separating from the anvil 24 at an angle of 45° with respect to the longitudinal direction of the elongated rubber strip 20.

A heater (not shown) for heating the cutter 30 (for example, to a temperature of 200 to 300°C) is housed in the cutter 30.

Due to heating, the cutter 30 can cut the rubber composition easily. Further, when an ultrasonic generator is attached to the cutter 30 to oscillate the cutter 30, the cutter 30 can also cut the rubber composition easily.

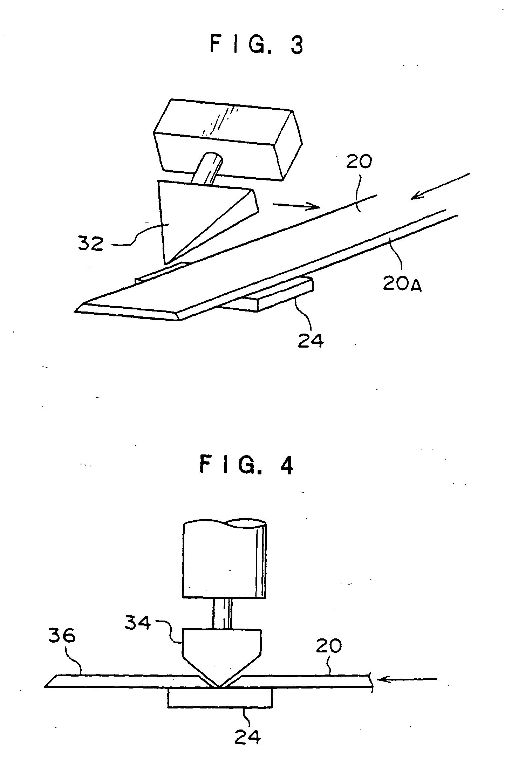

The cutting apparatus according to the present embodiment is of a so-called guillotine type. A cutter 32 as shown in Fig. 3 can be slid in a transverse direction of the elongated rubber strip 20 by a driving means such as a cylinder, a motor or the like (not shown), and the elongated rubber strip 20 is cut. As shown in Fig. 4, a crash cutter 34 whose lower end is angled at about 90° is pressed on the elongated rubber strip 20, and the elongated rubber strip 20 is cut.

Next, a manufacturing process of a rubber sheet will be explained.

First, during the initial process, the elongated rubber strip 20 is extruded and cut to a predetermined length by the cutting apparatus 22 to form a plurality of strip-shaped (rectangular) rubber sheets 36.

Further, a length of each of the strip-shaped rubber sheets 36 corresponds to a width as an inner liner of a tire (size in a direction orthogonal to a tire circumferential direction).

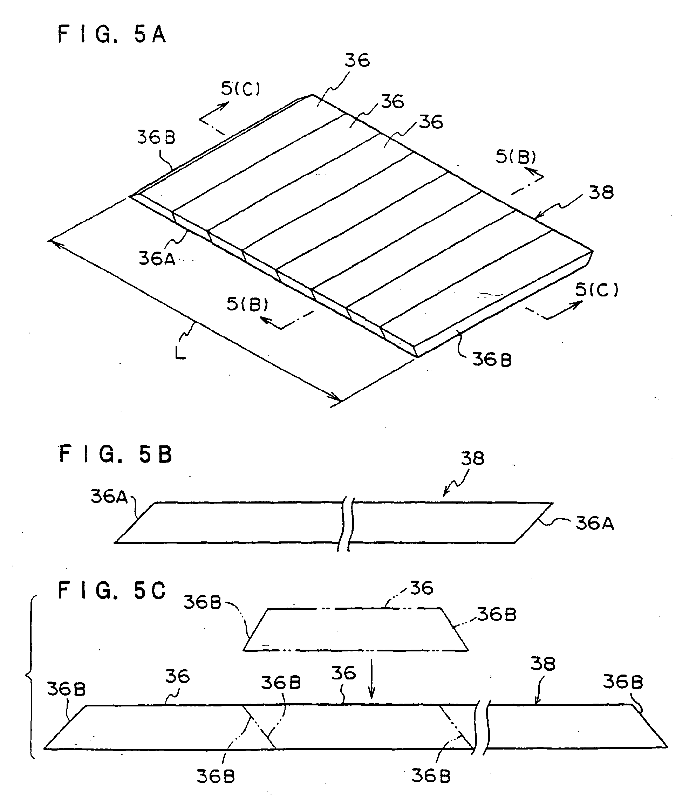

Next, as shown in Figs. 5 (A) and (C), the strip-shaped rubber sheets 36 are arranged side by side in a transverse direction such that their respective taper portions 36A (each of which is cut at an angle of 45°) in a longitudinal direction are all arranged along a uniform line, and their respective taper portions 36B (portions extruded at an angle of about 3°) at side portions in the transverse direction are overlapped with one another, whereby a sheet of an unvulcanized inner liner 38 can be formed.

Since the strip-shaped rubber sheet 36 plastically deforms in a simple manner before vulcanization, as shown in Fig. 5(C), when the taper portion 36B (illustrated by a chain double-dashed line) of one strip-shaped rubber sheet 36 is overlapped with the taper portion 36B of another strip-shaped rubber sheet 36, the taper portion 36B of one strip-shaped rubber sheet 36 to be adhered later (illustrated by the chain double-dashed line) deforms in conformity with the taper portion 36B of another strip-shaped rubber sheet 36 to which the latter taper portion 36B adheres (illustrated by a solid line), and the surface of the adhered rubber sheets does not become irregular.

As a result, an inner liner 38, all the end portions of which are tapered, can be obtained.

Further, a size L in Fig. 5 (A) is that measured in a direction corresponding to a tire circumferential direction.

The unvulcanized inner liner 38 that is formed in such a manner as described above is used for molding a green tire in accordance with an ordinary tire manufacturing method.

In other words, the unvulcanized inner liner 38 is wound around an outer circumferential surface of a band-forming drum, and portions of both end portions in a circumferential direction of the inner liner 38 are overlapped with one another. Thereafter, various tire structural members such as conventional carcass ply, bead core, bead filler, belt, and tread are pasted on the inner liner 38, and a green tire is completed.

Since all the portions, that are exposed at the inner surface side of the inner liner 38 disposed at an inner surface of the green tire, are formed into a tapered shape, chewing of air or an inner surface liquid into the edge portions can be prevented.

Further, in the present embodiment, the length of the strip-shaped rubber sheet can be changed, and the number of connections can be changed, whereby an inner liner 38 capable of accommodating various tires can be obtained.

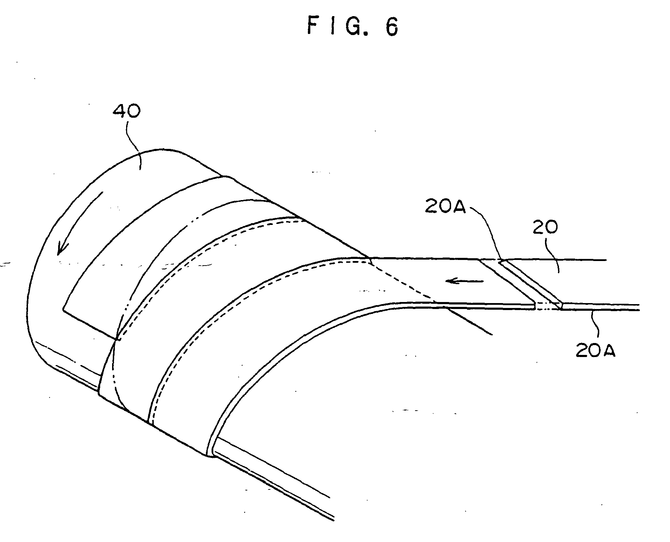

Next, with reference to Figs. 6 to 8, a method of manufacturing a thin rubber member according to a second embodiment of the present invention will be explained.

As shown in Fig. 6, in the present embodiment, first, the elongated rubber strip 20 extruded from the roller die 12 (not shown in Fig. 6) is spirally wound around an outer circumferential surface of a drum 40, which has a fixed diameter and rotates in a direction of an arrow, with the taper portions 20A overlapped with one another.

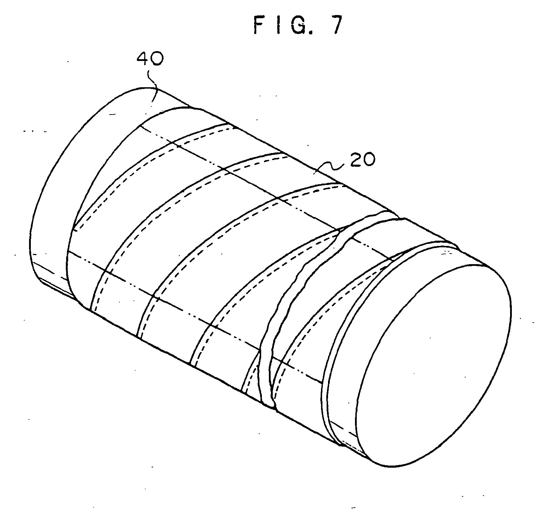

Next, as shown in Fig. 7, both end portions in the drum axial direction of the elongated rubber strip 20, which is spirally wound around the drum, are trimmed by a cutter or the like so as to be in parallel to the drum circumferential direction.

During the trimming, the cutter is inclined at an angle of 45° with respect to the sheet surface so that the cut surface forms an angle of 45° with respect to the sheet surface.

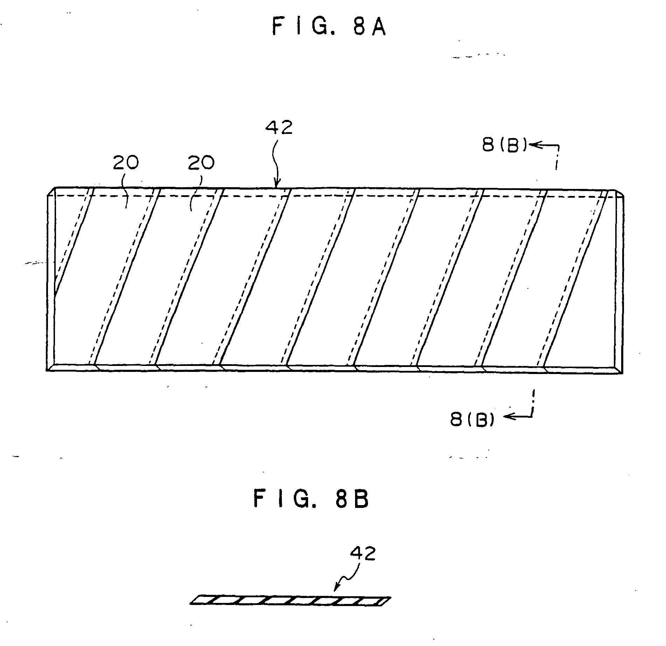

Next, the trimmed cylindrical elongated rubber strip 20 is cut by the cutter or the like along the drum axial direction (chain double-dot line portion in Fig. 7), and an inner liner 42 for one tire as shown in Fig. 8 is obtained.

When the trimmed cylindrical elongated rubber strip 20 is cut along the drum axial direction, the cutter is also inclined at an angle of 45° with respect to the sheet surface so that the cut surface forms an angle of 45° with respect to the sheet surface.

Also in the present embodiment, an inner liner 42, all the end portions of which are tapered, can be obtained.

In the present embodiment, the length and the width of the inner liner 42 can be changed in accordance with a tire due to an adjustment of the diameter of the drum 40, the number of cuts of the elongated rubber strip along the drum axial direction or the number of spiral winds.

Further, as for the drum 40, drums having various diameters are prepared in advance, and among them the drum 40 can be selected in accordance with the size of the inner liner 42. Further, a drum 40 having a structure in which the diameter of the drum 40 can be larger or smaller can be used.

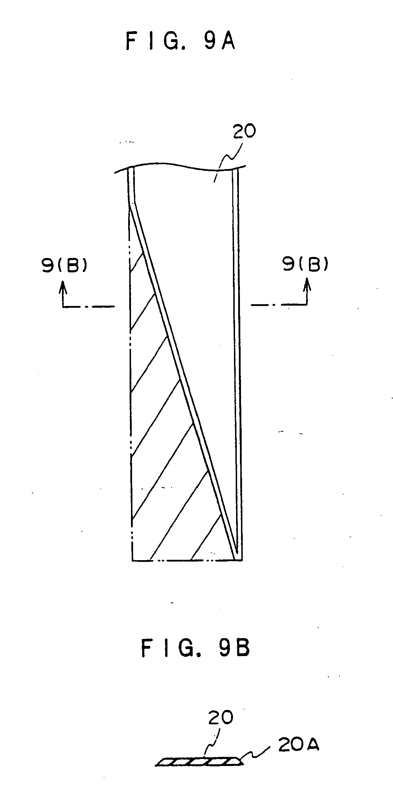

Moreover, in the present embodiment, after the elongated rubber strip 20 has been spirally wound around the drum, both end portions of the elongated rubber strip 20 in the drum axial direction are trimmed. As shown in Fig. 9 (A), the vicinity of the end portion in the longitudinal direction of the elongated rubber strip 20 before the elongated rubber strip 20 is wound around the drum is diagonally cut, the diagonal portion is then removed, and the end portion in the longitudinal direction of the elongated rubber strip 20 is formed into a tapered shape as seen from a plan view. Accordingly, when the elongated rubber strip 20 is spirally wound around the drum, both end portions of the elongated rubber strip 20 in the drum axial direction can be made parallel to the circumferential direction of the drum.

Moreover, when the diagonal portion is removed, the cutting of the diagonal portion is carried out in such a way that the cut surface is inclined at an angle of 45°, for example, with respect to the sheet surface (see Fig. 9 (B)).

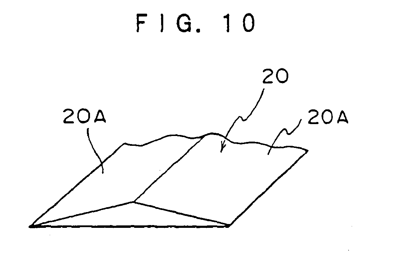

The elongated rubber strip 20 of the present embodiment has the taper portions 20A formed at both side portions in the transverse direction, and each of the taper portions 20A has a fixed thickness in the transverse direction. As shown in Fig. 10, the cross section of the elongated rubber strip 20 can be formed into a triangle (including only the taper portions 20A).

Even in a case of the elongated rubber strip 20 whose cross section is a triangle, if the taper portions 20A are overlapped with one another and spirally wound around the drum at a fixed pitch, an inner liner having a fixed thickness can be formed.

The cylindrical inner liner can be used unchanged.

For instance, in a case in which a green tire is manufactured, the elongated rubber strip 20 is spirally wound around the outer circumferential surface of the drum, and the cylindrical inner liner can be obtained around the outer circumferential surface of the drum.

Then, tire structural members such as a bead ring, a carcass ply, a side wall rubber, a belt, and a tread are pasted on the drum having the inner liner formed thereon, and a green tire can be formed.

Moreover, in the present embodiment, a method of manufacturing an inner liner for a tire has been explained. It is a matter of course that the present invention can manufacture a rubber sheet for other applications.

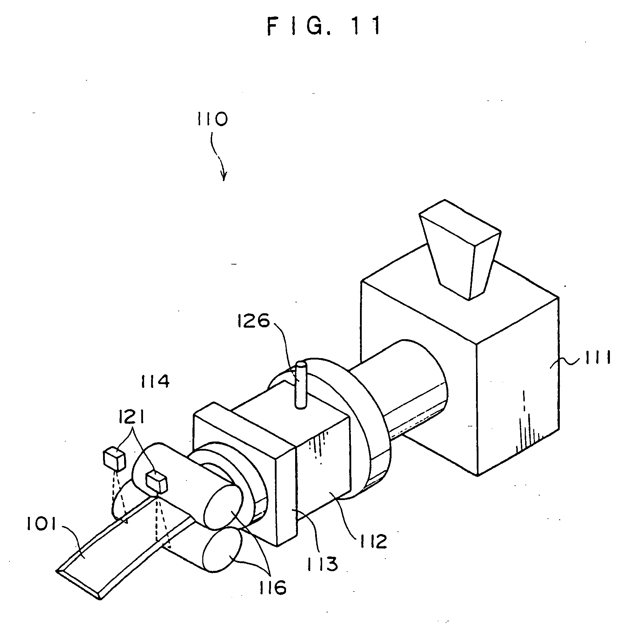

With reference to Figs. 11 to 14, a rubber roller 110 will be explained.

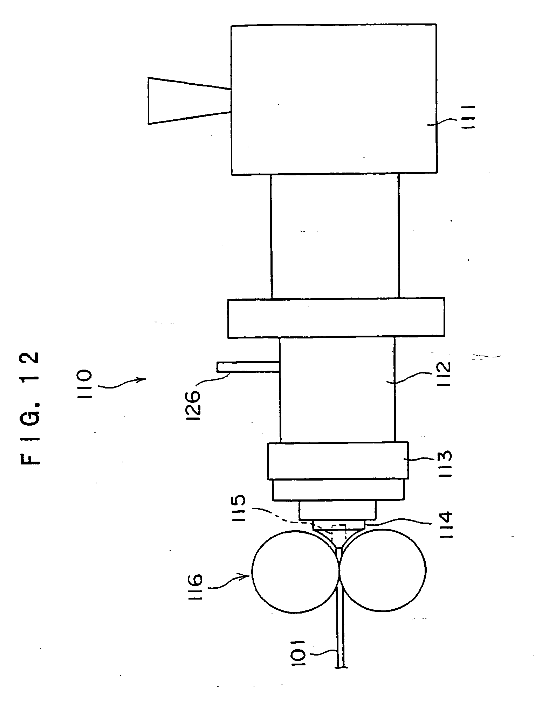

An outlook perspective view of the rubber roller 110 is shown in Fig. 11, and a side view thereof is shown in Fig. 12.

The rubber roller 110 sequentially molds an elongated rubber strip 101 for forming a thin gauge sheet as a tire structural member.

The elongated rubber strip 101 is molded into a flat strip shape having taper portions 101A and 101A in which both edge portions are inclined in a tapered manner, and while the taper portions 101A are sequentially overlapped with one another, a thin gauge sheet is formed.

As shown in Figs. 11 and 12, the rubber roller 110 comprises an extruder 111, a gear pump 112, a rectifier tube 113, a cap 115 of a head 114, and a pair of calendar rolls 116 in this sequential order. An unvulcanized rubber injected into the extruder 111 is molded, and sequentially discharged from the calender rolls 116 as the elongated rubber strip 101.

The extruder 111 extrudes the injected unvulcanized rubber or the like to the gear pump 112, while kneading the unvulcanized rubber by the rotation of the screw.

The gear pump 112 is a metering discharge pump which controls an amount of the unvulcanized rubber extruded from the extruder 111 to a discharge amount on the basis of a rotational speed of the gear, and discharges a certain amount of the unvulcanized rubber to the rectifier tube 113.

The rectifier tube 113 is a distance extender tube that connects the gear pump 112 and the cap 115 of the head 114 to form an appropriate distance therebetween, and can be interposed therebetween as needed.

When the unvulcanized rubber is discharged from the gear pump 112, concentration of the discharge of the rubber may often occur. Therefore, if a distance from the gear pump 112 to the head 114 is short, a degree at which the head 114 is filled with the rubber may vary. Accordingly, the rectifier tube 113 is interposed between the gear pump 112 and the cap 115 so as to prevent uneven filling of the unvulcanized rubber into the head 114. Consequently, filling of the unvulcanized rubber can appropriately be maintained and stabilized.

The cap 115 of the head 114 is formed into a configuration substantially similar to a target cross-sectional configuration of the elongated rubber strip 101 to be molded.

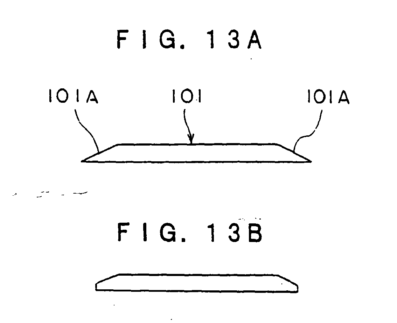

As shown in Fig. 13 (A), the target cross-sectional configuration of the elongated rubber strip 101 is formed into a flat plate shape having taper portions 101a and 101a, each of which is inclined in a tapered manner, at both edge portions. As shown in Fig. 13 (B), the cap 115 is provided with taper portions at both end edges, and is formed into an outlook configuration substantially similar to the target cross-sectional configuration of the elongated rubber strip 101.

Tip ends of the taper portions of the cap shape are cut off.

The cap 115 is formed into a configuration similar to the target cross-sectional configuration of the elongated rubber strip 101, whereby occurrence of rubber drift is prevented so that a stable elongated rubber strip 101 can be obtained.

Further, when the elongated rubber strip 101 having taper portions at both end portions is molded, the cap 115 is also formed into a configuration in which taper portions are provided at both end portions, and accordingly, the rubber volume is adjusted, and a more stable elongated rubber strip 101 can be molded.

An unvulcanized rubber that is formed so as to correspond to the shape of the cap 115 is discharged into the calendar roll 116 comprising an upper roll and a lower roll.

The unvulcanized rubber discharged from the cap 115 is nipped by the upper roll and the lower roll of the calendar roll 116 whose outer circumferential surface is respectively formed into a predetermined configuration, and is shaped to the target cross-sectional configuration of the elongated rubber strip 101, whereby a final elongated rubber strip 101 is formed and sequentially fed.

In order to form the target cross-sectional configuration of the elongated rubber strip 101 without producing a rubber to be kneaded back, a proper amount of rubber necessary for forming the target cross-sectional configuration of the elongated rubber strip 101 must be consistently discharged and supplied by the gear pump 112.

Due to a change of temperature or a micro variation of rubber properties, an amount of rubber discharged by the gear pump 112 slightly changes. This change considerably influences the width of the elongated rubber strip 101.

Therefore, the rubber roller 110 comprises a sheet width control means 120 that feedback-controls the width of the elongated rubber strip 101 discharged from the calendar roll 116.

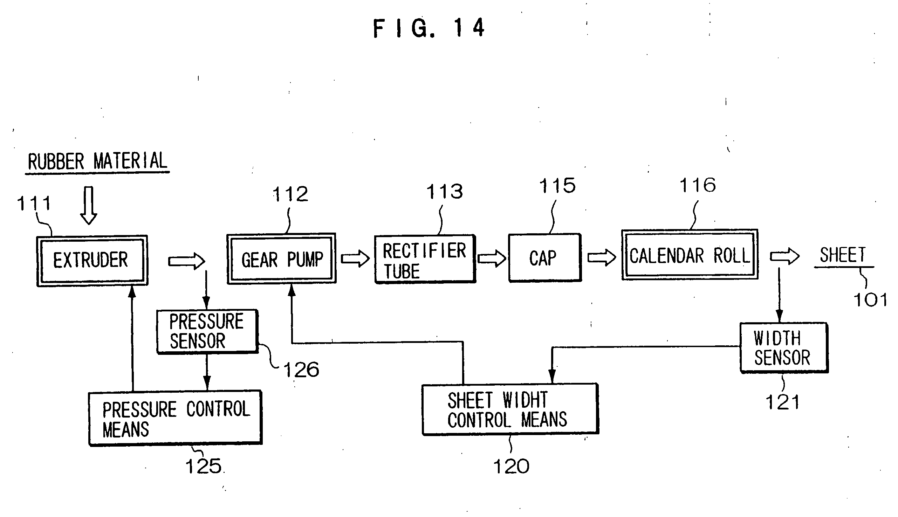

In other words, a width sensor 117, which is an optical sensor that optically detects a width of the elongated rubber strip 101, is provided at a downstream side of the calendar roll 116 (see Fig. 11), and as shown in Fig. 14, the sheet width control means 120 feedback-controls the gear pump 112 on the basis of the detected width of the elongated rubber strip 101 by the width sensor 117.

As shown in Fig. 14, at the same time, the rubber roller 110 comprises a pressure control means 125 that controls a supply pressure into an unvulcanized rubber with respect to the extruder 111 for supplying the unvulcanized rubber into the gear pump 112.

For this reason, a pressure sensor 126 is provided at an inlet of the gear pump 112. On the basis of the detected pressure by the pressure sensor 126, the pressure control means 125 feedback-controls the extruder 111 so that an unvulcanized rubber is supplied stably at a constant range of pressure.

In this way, the sheet width control means 120 feedback-controls the gear pump 112, from which an unvulcanized rubber is supplied at a constant range of pressure, to discharge a proper amount of rubber in accordance with a micro change while observing the width of the elongated rubber strip 101. Accordingly, the width accuracy of the elongated rubber strip 101 can be maintained higher.

As described above, in the rubber roller 110, since the elongated rubber strip 101 having a highly accurate cross-sectional configuration can be molded without producing a rubber to be kneaded back, an occurrence of deterioration of rubber quality due to repetition of knead-back can be prevented, and a knead-back operation is not required. Accordingly, the rubber roller 110 is able to take advantage of space, as equipment can be used that can be manufactured simply and inexpensively, and causes fewer problems and hardly inhibits productivity.

Further, in the present embodiment, the sheet width control means 20 feedback-controls the gear pump 112 on the basis of the detected width by the width sensor 117, and the pressure control means 125 feedback-controls the extruder 111 on the basis of the detected pressure by the pressure sensor 126. As far as the elongated rubber strip 101 having a highly accurate cross-sectional configuration can be molded without producing a rubber to be kneaded back, motors (not shown) for driving the gear pump 112 and the extruder 111 can be controlled so as to have a constant rotational speed (i.e., have a constant discharge amount).

Moreover, another control means which controls a rotation of a motor that drives the calendar roll 116 can be provided so as to control rotation of the motor on the basis of the detected width by the width sensor 117.

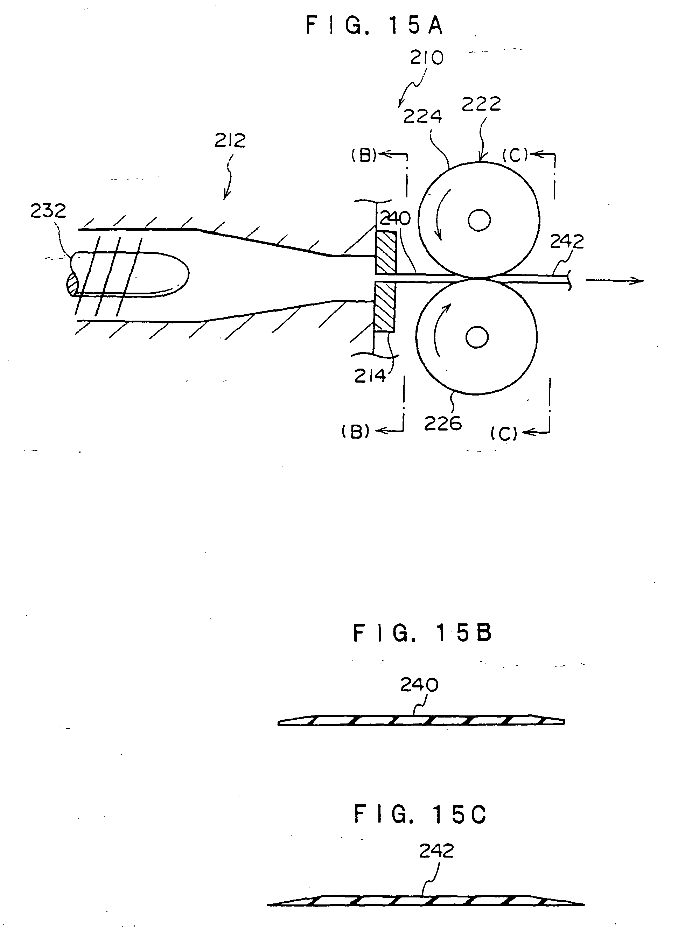

On the basis of Figs. 15 to 19, a rubber roller 210 according to another embodiment will be explained.

As shown in Fig. 15 (A), the rubber roller 210 of the present embodiment has a rubber extruder 212.

The rubber roller 210 aims to obtain an elongated rubber strip 242 which has a cross-sectional configuration as shown in Fig. 15(C) , whose thickness is constant at an intermediate portion in a transverse direction, and which has taper portions, each of which has a thickness gradually decreasing toward the end portions in the transverse direction, at both sides of the elongated rubber strip 242.

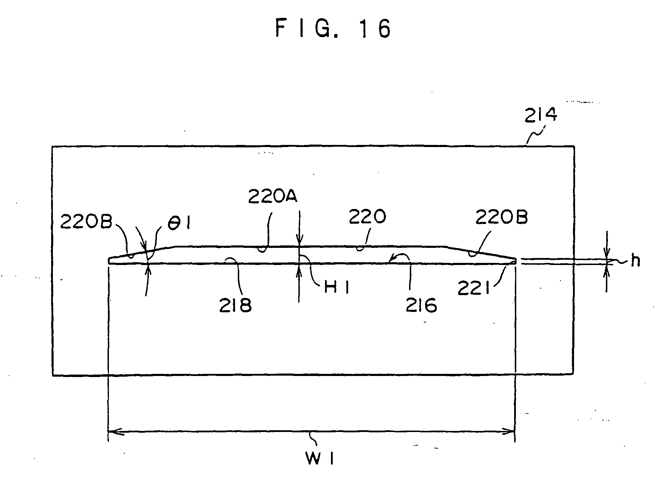

A laterally elongated opening 216, from which an unvulcanized rubber is extruded as shown in Fig. 16, is formed at a cap 214 of a rubber extruder 212.

The opening 216 has an entirely linear lower edge 218, and an upper edge 220 whose central portion 220A is linear and is parallel to the lower edge 218 and which has inclining surfaces 220B formed at both end portions. Further, vertical portions 221 perpendicular to the lower edge 218 are formed at both end portions of the opening 216.

In other words, the opening 216 is formed into a configuration substantially similar to a cross-sectional configuration of the elongated rubber strip 242.

The opening 216 of the present embodiment has a lateral width W1 of 100 mm, a height H1 of the opening 216 central portion of 1 mm, a height h of the vertical portion 221 of 0.5 mm, and an angle θ1 of the inclining surface 220B with respect to the lower edge 218 of 3°.

As shown in Fig. 15(A), a roller head 222 is provided at a downstream side in a direction a rubber is extruded, of the cap 214.

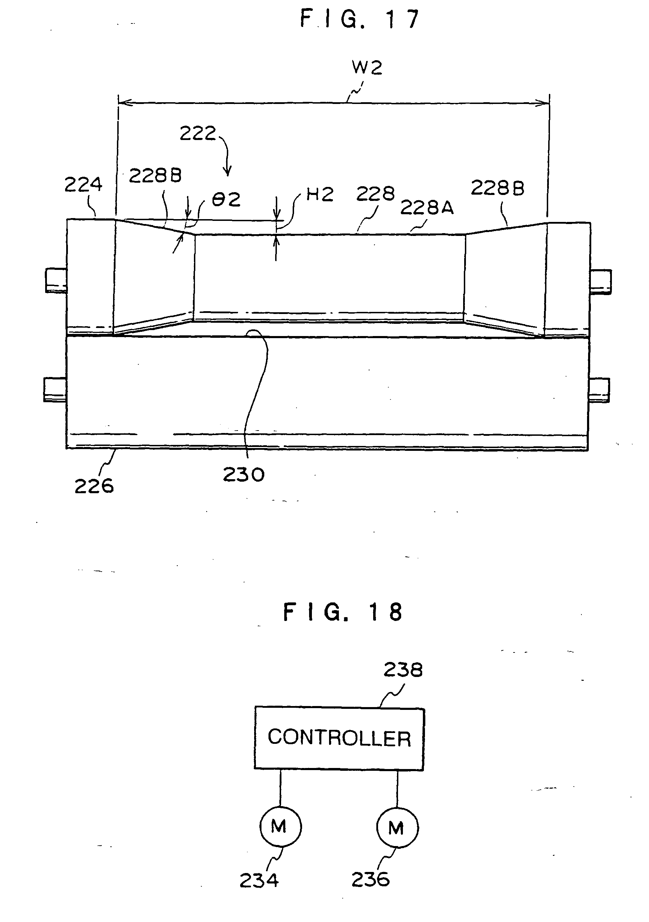

As shown in Fig. 17, the roller head 222 comprises an upper roller 224 and a lower roller 226.

The lower roller 226 has a constant diameter in an axial direction.

A groove 228 is formed at an intermediate portion in an axial direction.

The groove 228 has a central portion 228A whose depth is constant, and has inclining surfaces 228B, the depth of each of which gradually decreases, at both end portions of the groove 228.

In the present embodiment, a groove width W2 is 98 mm, a groove depth H2 of the central portion of the groove is 0.8 mm, and an angle θ2 of the inclining surface (with respect to a rotational axis) is 3°.

The upper roller 224 and the lower roller 226 are kept in contact with each other at their outer circumferential portions excluding the groove 228. An opening portion formed by the groove 228 and the lower roller 226 is a molding portion 230 for rolling an unvulcanized rubber, and has a configuration substantially similar to a cross-sectional configuration of the elongated rubber strip 242.

The upper roller 224, the lower roller 226, and a screw 232 of the rubber extruder 212 are respectively rotated by unillustrated motors.

As shown in Fig. 18, a motor 234 for rotating the upper roller 224 and the lower roller 226, and a motor 236 for rotating the screw 232 of the rubber extruder 212 are connected to a controller 238 which controls rotational frequencies of the motors 234 and 236.

Next, a description of an operation of the rubber roller 210 according to the present embodiment will be made.

First, a sheet-shaped unvulcanized rubber member 240 is extruded from the opening 216 of the cap 214 of the rubber extruder 212.

A cross-sectional configuration in a transverse direction of the unvulcanized rubber member extruded from the cap 214 (see Fig. 15 (B)) is similar to that along a transverse direction of the elongated rubber strip 242, and has a width and a thickness which are slightly larger than those of the opening 216 of the cap 214.

The vertical portions 221 each having a height h of 0.5 mm are formed at both end portions of the opening 216 because, if heights of portions in the vicinities of both end portions (taper tip ends) are insufficient, a case may occur that an unvulcanized rubber is not fully extruded from the opening 216.

The height h of the vertical portion 221 is experimentally determined and set so that an unvulcanized rubber can be extruded evenly.

The unvulcanized rubber member extruded from the cap 214 is rolled by the roller head 222.

At this time, a controller 238 controls both the motor 236 of the rubber extruder 212 and the motor 234 of the roller head 222 so as not to form a rubber bank on the roller head 222.

In the present embodiment, the unvulcanized rubber member 240 extruded from the cap 214 is rolled by the molding portion 230 which is formed into a configuration similar to a cross-sectional configuration in the transverse direction of the elongated rubber strip 242 and which is slightly smaller than a cross-section along the transverse direction of the elongated rubber strip 242.

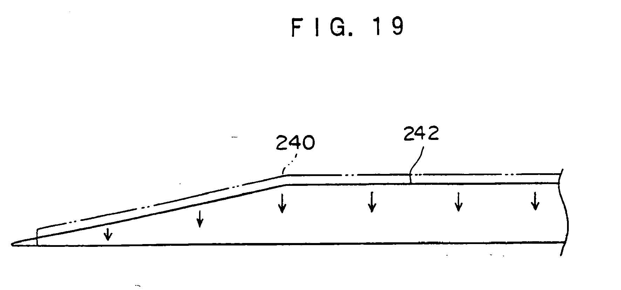

By rolling the unvulcanized rubber member 240 without forming a rubber bank on the roller head 222, a direction in which the unvulcanized rubber member 240 is rolled (direction of arrow shown in Fig. 19) becomes uniform in the transverse direction of the elongated rubber strip 242. As a result, a shrunk amount of the sheet which has been rolled becomes uniform in the transverse direction of the elongated rubber strip 242, and corrugations are not formed on the taper portions which have been cooled, whereby an elongated rubber strip 242 having excellent properties can be obtained.

Since the embodiment is structured so as not to form a rubber bank on the roller head 222, no undesired unvulcanized rubber is deposited on the roller surface, and no foreign matter (undesired unvulcanized rubber that has been stripped off from the roller surface) is deposited on the elongated rubber strip 242.

Moreover, for example, there is a case in which an extremely small amount of a rubber bank is formed on the head 222 due to an error of the rubber extruding amount or the rotational frequency of the roller head. Unless corrugations are formed on the taper portions of the elongated rubber strip 242, even if the small amount of the rubber bank is formed, this comes within a category that "no rubber bank is formed on the roller head" as referred herein.

As described above, the method of manufacturing a thin rubber member according to the present invention is suitable for manufacturing a rubber sheet that is used as a tire structural member, for example an inner liner or the like.

Further, the rubber roller and the method of rolling a rubber are suitable for manufacturing an elongated rubber strip that is used for manufacturing the thin rubber member.

## Claims

1. A method of manufacturing a thin rubber member comprising:
a first step of cutting a long rectangular rubber strip (20) having taper portions (20A; 36B) formed at both side portions thereof to have a predetermined length such that both cut end portions (36A) of each strip are inclined with respect to a normal line stood vertically on the strip surface thereby to form a segmented rubber strip (36); and
a second step of connecting a plurality of the segmented rubber strips (36) to each other in a transverse direction such that the taper portions (36B) at both side portions in a transverse direction of each of the segmented rubber strips (36) are overlapped to each other, thereby obtaining a rubber sheet (38).

2. A method of manufacturing a thin rubber member comprising:
a first step of cutting a long rectangular rubber strip (20) having taper portions (20A; 36B) formed at both side portions thereof to have a predetermined length thereby to form a segmented rubber strip (36);
a second step of connecting a plurality of the segmented rubber strips (36) to each other in a transverse direction thereof such that taper portions (36B) at both side portions in the transverse direction of each of the segmented rubber strips (36) are overlapped to each other thereby to obtain a rubber sheet (38); and
a third step of cutting both end portions of the rubber sheet (38) in a direction orthogonal to a direction in which the segmented rubber strips (36) are connected to each other such that both cut end portions (36A) of each strip are inclined with respect to a normal line stood vertically on the sheet surface.

3. A method as claimed in claim 1, wherein the second step comprises spirally winding the rectangular rubber strip (20) while overlapping the taper portions (20A) thereof with each other.

4. A method as claimed in claim 3, further comprising cutting each of a wind-start portion and a wind-end portion of the rectangular rubber strip (20) into a tapered shape whose width gradually becomes narrow.

5. A method as claimed in claim 3 or 4, further comprising cutting at least one portion of a cylindrical thin rubber member obtained by spirally winding the rectangular rubber strip (20) in an axial direction thereby to obtain at least one rubber sheet (42).

## Patentansprüche

1. Herstellungsverfahren für ein dünnes Kautschukteil, umfassend:
einen ersten Schritt des Schneidens eines langen, rechteckigen Kautschukstreifens (20) mit sich verjüngenden Abschnitten (20A; 36B), welche an beiden Seitenabschnitten davon ausgebildet sind, und eine vorbestimmte Länge aufweisen, so dass beide Schnittendenabschnitte (36A) jedes Streifens in Bezug auf eine normale Achse geneigt sind, welche sich vertikal auf der Streifenoberfläche befindet, und dabei einen segmentierten Kautschukstreifen (36) bildet; und
einen zweiten Schritt des Verbindens einer Vielzahl der segmentierten Kautschukstreifen (36) miteinander in einer schrägen Richtung, so dass die sich verjüngenden Abschnitte (36B) an beiden Seitenabschnitten in einer schrägen Richtung von jeder der segmentierten Kautschukstreifen (36) einander überlappen und dabei ein Kautschukblatt (38) erhalten wird.

2. Herstellungsverfahren für ein dünnes Kautschukteil, umfassend:
einen ersten Schritt des Schneidens eines langen, rechteckigen Kautschukstreifens (20) mit sich verjüngenden Abschnitten (20A; 36B), welche an beiden Seitenabschnitten davon gebildet sind, um eine vorbestimmte Länge aufzuweisen und damit einen segmentierten Kautschukstreifen (36) zu bilden;
einen zweiten Schritt des Verbindens einer Vielzahl der segmentierten Kautschukstreifen (36) miteinander in einer schrägen Richtung davon, so dass die sich verjüngenden Abschnitte (36B) an beiden Seitenabschnitten in der schrägen Richtung jeder der segmentierten Kautschukstreifen (36) einander überlappen, und dabei ein Kautschukblatt (38) erhalten wird, und
ein dritter Schritt des Schneidens der beiden Endabschnitte des Kautschukblatts (38) in einer Richtung senkrecht zu einer Richtung, in welcher die segmentierten Kautschukstreifen (36) miteinander verbunden sind, so dass die Schnittendenabschnitte (36A) jedes Streifens in Bezug auf eine normale Achse geneigt sind, welche vertikal auf der Blattoberfläche steht.

3. Verfahren nach Anspruch 1, wobei der zweite Schritt ein spiralförmiges Aufwickeln des rechteckigen Kautschukstreifens (20) umfasst, während sich die verjüngten Abschnitte (20A) davon miteinander überlappen.

4. Verfahren nach Anspruch 3, weiterhin umfassend das Schneiden sowohl eines Aufwickelstartabschnitts und eines Aufwickelendabschnitts des rechteckigen Kautschukstreifens (20) in eine sich verjüngende Form, deren Breite graduell schmal wird.

5. Verfahren nach Anspruch 3 oder 4, weiterhin umfassend das Schneiden von zumindest einem Abschnitt eines zylindrischen, dünnen Kautschukteils, welches durch spiralförmiges Aufwickeln des rechteckigen Kautschukstreifens (20) in einer axialen Richtung erhalten wurde, um dabei zumindest ein Kautschukblatt (42) zu erhalten.

## Revendications

1. Procédé de fabrication d'un élément mince en caoutchouc comprenant :
une première étape consistant à couper une longue bande rectangulaire (20) de caoutchouc ayant des parties biseautées (20A ; 36B) formées sur ses deux parties latérales afin d'avoir une longueur prédéterminée telle que deux tronçons extrêmes coupés (36A) de chaque bande sont inclinés par rapport à une ligne normale s'élevant verticalement sur la surface de la bande, formant ainsi une bande de caoutchouc segmentée (36) ; et
une seconde étape consistant à relier entre elles plusieurs des bandes segmentées (36) de caoutchouc dans une direction transversale afin que les parties biseautées (36B) sur les deux côtés, dans une direction transversale de chacune des bandes segmentées (36) de caoutchouc, se chevauchent entre elles, de manière à obtenir une feuille (38) de caoutchouc.

2. Procédé de fabrication d'un élément mince en caoutchouc comprenant :
une première étape consistant à couper une longue bande rectangulaire (20) de caoutchouc ayant des parties biseautées (20A ; 36B) formées sur ses deux côtés afin d'avoir une longueur prédéterminée pour former ainsi une bande de caoutchouc segmentée (36) de caoutchouc ;
une deuxième étape consistant à relier entre elles plusieurs des bandes segmentées (36) de caoutchouc dans une direction transversale de celles-ci afin que des parties biseautées (36B) sur les deux côtés, dans la direction transversale de chacune des bandes segmentées (36) de caoutchouc, se chevauchent entre elles, de manière à obtenir une feuille (38) de caoutchouc ; et
une troisième étape consistant à couper les deux parties extrêmes de la feuille (38) de caoutchouc dans une direction orthogonale à une direction dans laquelle les bandes segmentées (36) de caoutchouc sont reliées entre elles de manière que les deux parties extrêmes coupées (36A) de chaque bande soient inclinées par rapport à une ligne normale s'élevant verticalement sur la surface de la feuille.

3. Procédé selon la revendication 1, dans lequel la deuxième étape comprend l'enroulement en spirale de la bande rectangulaire (20) de caoutchouc tout en faisant se chevaucher mutuellement ses parties biseautées (20A).

4. Procédé selon la revendication 3, comprenant en outre la coupe de chacune d'une partie de début d'enroulement et d'une partie de fin d'enroulement de la bande rectangulaire (20) de caoutchouc en une forme effilée dont la largeur décroît progressivement.

5. Procédé selon la revendication 3 ou 4, comprenant en outre la coupe d'au moins une partie d'un élément mince cylindrique en caoutchouc obtenu en enroulant en spirale la bande rectangulaire (20) de caoutchouc dans une direction axiale afin d'obtenir au moins une feuille (42) de caoutchouc.
